# EUROPÄISCHE PATENTSCHRIFT

(11) **EP 1 320 701 B1**
(45) Veröffentlichungstag und Bekanntmachung des Hinweises auf die Patenterteilung: **22.03.2006**
(21) Anmeldenummer: 01972029.1
(22) Anmeldetag: 08.09.2001
(51) Int. Cl.: F16K 11/074, F16K 11/078, F16K 3/08

(54) **SANITÄRE MISCHBATTERIE**
SANITARY MIXING UNIT
MITIGEUR POUR INSTALLATIONS SANITAIRES

(30) Priorität: 29.09.2000 DE 10048041
(43) Veröffentlichungstag der Anmeldung: 25.06.2003
(73) Patentinhaber: Ideal-Standard GmbH & Co. OHG, 53121 Bonn (DE)
(72) Erfinder: EMS, Josef, 54516 Wittlich (DE); BERGMANN, Konrad, 54292 Trier (DE)
(74) Vertreter: Gesthuysen, von Rohr & Eggert
(86) Internationale Anmeldenummer: PCT/EP2001/010382
(87) Internationale Veröffentlichungsnummer: WO 2002/027224

(56) Entgegenhaltungen:
- EP-A- 0 611 260
- WO-A-97/01807
- CH-A- 648 390
- US-A- 5 340 018

## Beschreibung

Die Erfindung betrifft eine sanitäre Mischbatterie, insbesondere zum Wandeinbau, mit einer ein Außengehäuse aufweisenden Kartusche, mit einer Mengeneinstelleinrichtung, einer Temperatureinstelleinrichtung und einer Thermostateinrichtung, wobei die Mengeneinstelleinrichtung eine feststehende Ventilscheibe und eine mit dieser zusammenwirkende drehbewegliche Ventilscheibe aufweist, im Außengehäuse ein Innengehäuse koaxial zum Außengehäuse um wenigstens 180° drehbar gelagert ist, im Innengehäuse die Thermostateinrichtung angeordnet ist, die drehbewegliche Ventilscheibe mit dem Innengehäuse drehfest verbunden ist, die feststehende Ventilscheibe drehfest zum Außengehäuse ist und das Innengehäuse stirnseitig aus dem Außengehäuse mit einem Angriffsabschnitt zum Aufsetzen eines ersten Bedienungsdrehgriffs zur Mengeneinstellung herausgeführt ist.

Mischbatterien der in Rede stehenden Art sind in verschiedenen Ausfubrungsformen bekannt, so z. B. aus der US-Patentschrift 5,340,018 oder aus der europäischen Offenlegungsschrift 0 611 260. Bei diesen Mischbatterien muß dem Kaltwasserteil der Mischkammer vom Kaltwasseranschluß her Kaltwasser und dem Warmwasserteil der Mischkammer vom Warmwasseranschluß her Warmwasser zugeleitet werden. Bei seitenverkehrter Installation einer solchen Mischbatterie, also bei Installation mit Anschluß des Kaltwasseranschlusses an die Warmwasserleitung und des Warmwasseranschlusses an die Kaltwasserleitung, arbeitet eine solche Mischbatterie ohne besondere Maßnahmen mit verkehrter Betätigungsrichtung bzw. bei der Ausgestaltung als Thermostat-Mischbatterie überhaupt nicht.

Da häufig durch Fehler der Installationshandwerker oder durch bauliche Gegebenheiten eine seitenverkehrte Installation der Wasseranschlüsse erfolgt, wird bei den gattungsgemäßen modernen Mischbatterien dafür gesorgt, daß die Zuordnung vom Kaltwasseranschluß zum Kaltwasserteil und vom Warmwasseranschluß zum Warmwasserteil vertauschbar ist.

Aus der deutschen Offenlegungsschrift 35 41 986 geht eine Mischbatterie mit einem Befestigungsschaft hervor, in den die Versorgungsleitungen von Kalt- und Warmwasser hineingeführt sind und in dem eine Sackbohrung für die Aufnahme eines Zwischenstücks vorgesehen ist. Um eine seitenverkehrte Installation zu ermöglichen, ist vorgesehen, daß in der Sackbohrung wahlweise ein Zwischenstück mit gekreuzt oder mit parallel ausgebildeten Wasserführungskanälen für den Kalt- und Warmwasserzufluß eingesetzt wird. Nachteilig bei dieser bekannten Mischbatterie ist, daß zwei unterschiedliche Arten von Zwischenstücken erforderlich sind, um die Anpassung an die tatsächlich gegebenen Anschlußverhältnisse zu ermöglichen. Ein weiterer Nachteil besteht darin, daß der Befestigungsschaft und damit auch das Zwischenstück relativ viel Platz in Anspruch nehmen, was sich ungünstig auf die Einbautiefe der Mischbatterie auswirkt.

Des weiteren ist aus der deutschen Offenlegungsschrift 37 30 375 eine Mischbatterie bekannt, bei der in den Armaturengrundkörper jeweils im Bereich des Kaltwasseranschlusses und des Warmwasseranschlusses Strömungsleiteinsätze auswechselbar eingesetzt und gegeneinander austauschbar sind. Auch bei dieser Ausgestaltung sind besondere Bauteile erforderlich, um die richtige Anpassung an die Anschlußverhältnisse vorzunehmen.

Ferner ist aus der den nächstgelegenen Stand der Technik bildenden europäischen Offenlegungsschrift 0 611260 eine Mischbatterie belsannt, bei der zur Anpassung an die tatsächlich gegebenen Anschlußverhältnisse keine zusätzlichen Bauteile bzw. Veränderungen am Armaturengrundkörper erforderlich sind. Die konstruktiven Änderungen zur Gewährleistung der seitenverkehrten Installation beschränken sich auf Veränderungen an der Kartusche. Je nach Anwendungsfall ist es lediglich erforderlich, das Innengehäuse gegenüber dem Außengehäuse um 180° zu drehen. Das Außengehäuse selbst mit der feststehenden Ventilscheibe bleibt in seiner Anordnung bzw. Einbaulage im Armaturengrundkörper und wird nicht gedreht. Aufgrund der Drehbarkeit des Innengehäuses relativ zu dem fest vorgesehenen Außengehäuse besteht allerdings die Gefahr, daß es auch während des Betriebs der sanitären Mischbatterie zu einer Verdrehung des Innengehäuses um 180° kommt. Damit besteht die Gefahr, daß die Zuordnung der Wasseranschlüsse zum Kaltwasserteil bzw. zum Warmwasserteil verlorengeht, mit der Folge, daß die Thermostateinrichtung der sanitären Mischbatterie nicht mehr funktionsfähig wäre.

Aufgabe der vorliegenden Erfindung ist es, eine sanitäre Mischbatterie der eingangs genannten Art zur Verfügung zu stellen, bei der auf zuverlässige Weise die funktionsgerechte Anpassung der Zulaufverhältnisse an die tatsächlich gegebenen Anschlußverhältnisse gewährleistet ist.

Die zuvor hergeleitete und aufgezeigte Aufgabe ist erfindungsgemäß im wesentlichen dadurch gelöst, daß Mittel zur Drehbegrenzung des ersten Bedienungsdrehgriffs vorgesehen sind, die Mittel zur Drehbegrenzung eine Führungsnut am Außengehäuse und einen in der Führungnut geführten Vorsprung am ersten Bedienungsdrehgriff aufweisen, in dem Angriffsabschnitt eine in Längsrichtung der Kartusche verlaufende Nut vorgesehen ist, und der Vorsprung am ersten Bedienungsdrehgriff mit der in dem Angriffsabschnitt vorgesehenen Nut zusammenwirkt.

Die erfindungsgemäße Ausgestaltung bietet eine Reihe von zum Teil wesentlichen Vorteilen.

Um eine definierte Schließ- und Öffnungsstellung zu erhalten, sind Mittel zur Drehbegtenzung erfindungsgemäß des ersten Bedienungsdrehgriffs vorgesehen. Dabei weisen die Mittel zur Drehbegrenzung eine Führungsnut am Außengehäuse auf und einen in der Führungsnut geführten Vorsprung auf, der am ersten Bedienungsdrehgriff vorgesehen ist.

Wie aus dem Stand der Technik bekannt, bietet es sich konstruktiv besonders an, das Innengehäuse stirnseitig aus dem Außengehäuse mit einem Angriffsabschnitt zum Aufsetzen eines ersten Bedienungsdrehgriffs zur Mengeneinstellung des Mischwassers herauszuführen. Diese Ausgestaltung hat den Vorteil, daß auf den überstehenden Angriffsabschnitt ohne weiteres der Bedienungsdrehgriff zur Mengeneinstellung aufgesteckt werden kann. Nach Abnahme des Bedienungsdrehgriffes kann das Innengehäuse gegenüber dem Außengehäuse in der zuvor beschriebenen Art um 180° gedreht werden, sofern dies im Hinblick auf die Einbauverhältnisse erforderlich ist.

Weiterhin ist es zur Temperatureinstellung günstig, wenn die Temperatureinstelleinrichtung einen aus dem Innengehäuse stirnseitig herausragenden Angriffsabschnitt zum Aufsetzen eines zweiten Bedienungsdrehgriffs zur Temperatureinstellung aufweist. Stirnseitig weist die Kartusche damit zwei Angriffsabschnitte auf, die beide über das Außengehäuse überstehen, so daß die beiden Bedienungsdrehgriffe in einfacher Weise stirnseitig montiert und betätigt werden können. Im übrigen ist es aufgrund der gewählten Anordnung und Ausbildung so, daß der erste Bedienungsdrehgriff und der zweite Bedienungsdrehgriff die gleiche Drehachse aufweisen.

Um die Mengeneinstellung schnell und einfach vornehmen zu können, sind die Ventilöffnungen der Ventilscheiben derart ausgebildet, daß sich der maximale Öffnungsquerschnitt nach einer Drehung von weniger als 180°, vorzugsweise bei etwa 90° ergibt.

Da es die erfindungsgemäße Ausgestaltung zuläßt, das Innengehäuse gegenüber dem Außengehäuse zu drehen, bietet es sich zum einfachen Auffinden der jeweils gewünschten Anschlußstellung an, am Außengehäuse und am Innengehäuse miteinander korrespondierende Markierungen zur Anzeige des Drehzustands des Innengehäuses gegenüber dem Außengehäuse vorzusehen. Bei übereinstimmenden Markierung ist dann entweder die eine oder aber die andere Anschlußstellung erreicht.

Grundsätzlich ist es möglich, die Kartusche derart auszugestalten, daß sie unterseitig offen ist, so daß die einzelnen Bauteile bedarfsweise entnommen werden können. Bevorzugt ist es aber, daß am Außengehäuse eine unterseitige Bodenplatte zum Verschluß der Kartusche befestigt ist. Hierdurch wird die gesamte Kartusche zu einer einfach zu handhabenden Baueinheit, die eine Verstellung des Innengehäuses gegenüber dem Außengehäuse ohne weiteres ermöglicht und im übrigen leicht montiert und bedarfsweise ausgewechselt werden kann.

Bei einer bevorzugten Ausgestaltung ist vorgesehen, daß die Bodenplatte mit dem Außengehäuse verrastet ist. Eine derartige Verbindung läßt sich ohne weiteres herstellen und gewährleistet einen sicheren Abschluß der Kartusche. In diesem Zusammenhang bietet es sich dann besonders an, die feststehende Ventilscheibe drehfest an der Bodenplatte zu halten.

Da die erfindungsgemäße Kartusche eine Vielzahl von Bauteilen enthält, kann, um einen einfachen Einbau der einzelnen Bauteile sicherzustellen, das Innengehäuse ohne weiteres mehrstückig ausgebildet sein. In diesem Falle ist es aber erforderlich, daß benachbarte Teile des Innengehäuses drehfest miteinander verbunden sind.

Nachfolgend wird ein Ausführungsbeispiel anhand der Zeichnung erläutert. Es zeigt:
- Fig. 1: eine perspektivische Ansicht eines Teils einer erfindungsgemäßen Mischbatterie,
- Fig. 2: eine Explosionsdarstellung des Teils der sanitären Mischbatterie aus Fig. 1,
- Fig. 3: eine Explosionsdarstellung von Teilen der erfindungsgemäßen Mischbatterie,
- Fig. 4: eine vergrößerte perspektivische Darstellung einer erfindungsgemäßen Kartusche,
- Fig. 5: eine Querschnittsansicht einer erfindungsgemäßen Kartusche,
- Fig. 6: eine um 90° gegenüber der Darstellung aus Fig. 5 gedrehte Querschnittsansicht der erfindungsgemäßen Kartusche und
- Fig. 7: eine Explosionsdarstellung der Einzelteile der erfindungsgemäßen Kartusche.

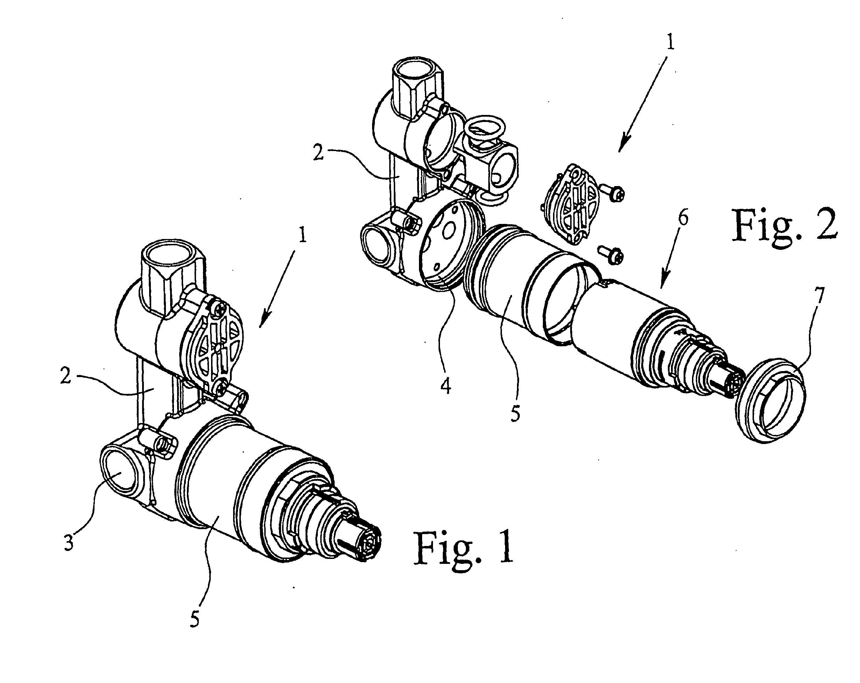

In den Fig. 1 und 2 sind Teile einer nicht vollständig dargestellten sanitären Mischbatterie 1 gezeigt, die insbesondere zum Wandeinbau vorgesehen ist. Die Mischbatterie 1 weist einen Grundkörper 2 auf, der einen Kaltwasseranschluß 3 und auf der gegenüberliegenden Seite einen nicht dargestellten Warmwasseranschluß aufweist. In eine Aufnahme 4 des Grundkörpers 2 ist eine Aufnahmehülse 5 für eine Kartusche 6 eingerastet. Über die Kartusche 6 ist eine Einstellung der Menge und der Temperatur des Mischwassers möglich. Hierzu weist die Mischbatterie 1 in der Kartusche eine Mengeneinstelleinrichtung und eine Temperatureinstelleinrichtung auf. Des weiteren ist eine Thermostateinrichtung in der Kartusche 6 vorgesehen. Die Fixierung der Kartusche 6 in bzw. an der Aufnahmehülse 6 erfolgt über eine Feststellmutter 7.

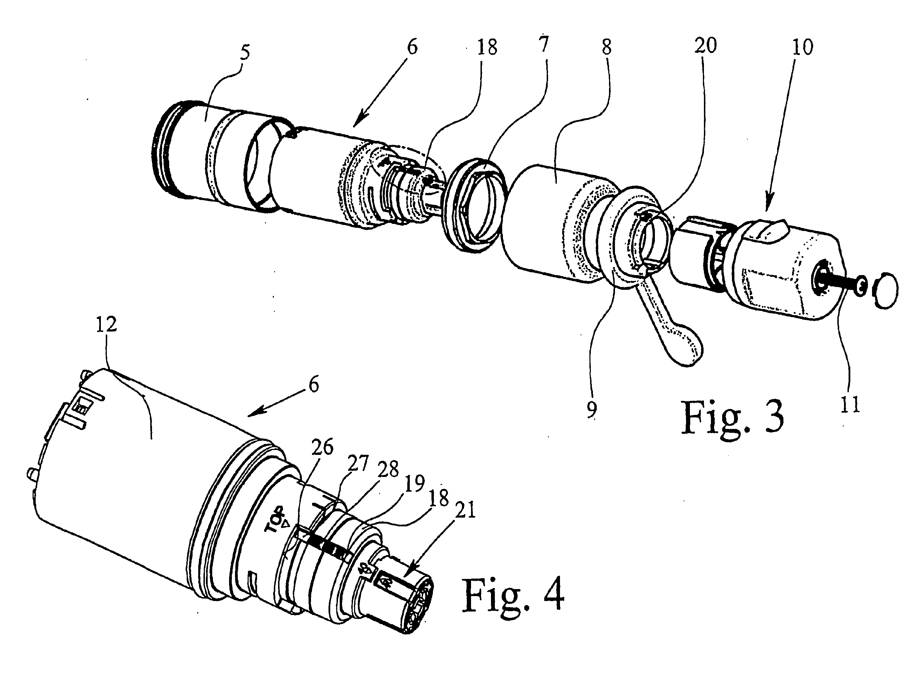

In Fig. 3 ist ergänzend zu den in Fig. 2 dargestellten Bauteilen dargestellt eine Abdeckhülse 8, die über die Aufnahmehülse 5 geschoben wird, ein erster Bedienungsdrehgriff 9 und ein sich aus mehreren Bauteilen zusammensetzender zweiter Bedienungsdrehgriff 10, der über eine Schraube 11 mit der Stirnseite der Kartusche 6 zu verschrauben ist.

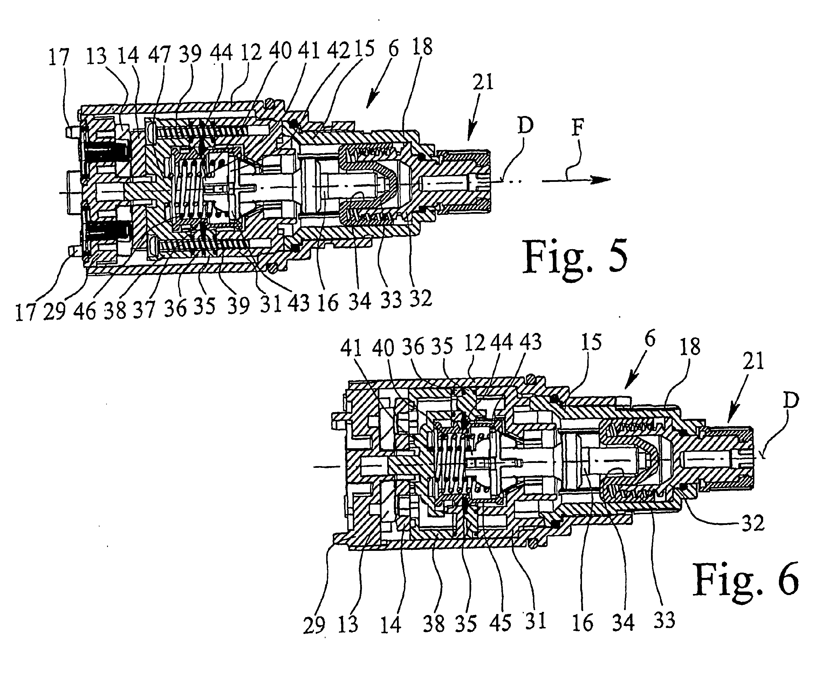

Wie sich insbesondere aus Fig. 5 und 6 ergibt, ist die Mechanik zur Mengen- und Temperatursteuerung und -regelung in bzw. an der Kartusche 6 realisiert. Die Kartusche 6 selbst weist hierzu ein Außengehäuse 12 auf, in dem u. a. eine feststehende Ventilscheibe 13 und eine damit zusammenwirkende drehbewegliche Ventilscheibe 14 der Mengeneinstelleinrichtung vorgesehen sind.

Wesentlich ist nun, daß im Außengehäuse 12 ein Innengehäuse 15 koaxial zum Außengehäuse 12 um wenigstens 180° um die Achse D, bei der es sich um die Mittellängsachse der Kartusche 6 handelt, drehbar ist. Dabei ist die ein thermostatisches Element 16 aufweisende Thermostateinrichtung im Innengehäuse 15 angeordnet und wird damit bei Drehung des Innengehäuses 15 gegenüber dem Außengehäuse 12 mit gedreht. Weiterhin ist die drehbewegliche Ventilscheibe 14 am Innengehäuse 15 drehfest gehalten, so daß auch die Ventilscheibe 14 bei Drehung des Innengehäuses 15 gegenüber dem Außengehäuse 12 mit gedreht wird. Demgegenüber ist die feststehende Ventilscheibe 13 drehfest gegenüber dem Außengehäuse, so daß bei Drehung des Innengehäuses 15 eine Relativbewegung der beweglichen Ventilscheibe 14 gegenüber der festen Ventilscheibe 13, die sich nicht bewegt, stattfindet.

Im Ergebnis bedeutet die vorgenannte Ausgestaltung, daß die in die Aufnahmehülse 5 und die Aufnahme 4 des Grundkörpers 2 eingesetzte Kartusche 6 zur Anpassung an die jeweiligen baulichen Gegebenheiten nicht aus der zuvor beschriebenen Einbaulage entnommen, sondern daß lediglich das Innengehäuse 15 jeweils um 180° um die Achse D gedreht werden muß, um ein fehlerfreies Funktionieren der Mischbatterie 1 in Abhängigkeit der Lage der Anschlüsse zu gewährleisten. Um im übrigen in diesem Zusammenhang zu verhindern, daß sich bei Drehung des Innengehäuses 15 das Außengehäuse 12 mit dreht, sind am unteren Ende der Kartusche 6 entsprechende Fixiervorsprünge 17 zum Zusammenwirken mit im einzelnen nicht dargestellten Öffnungen am Grundkörper bzw. an der Aufnahme 4 vorgesehen.

Stirnseitig, d. h. auf der dem Benutzer zugewandten Seite, ist das Innengehäuse 15 aus dem Außengehäuse 12 mit einem Angriffsabschnitt 18 herausgeführt. Auf den Angriffsabschnitt 18 ist der erste Bedienungsdrehgriff 9 zur Mengeneinstellung aufschiebbar. Zum Aufschieben des ersten Bedienungsdrehgriffs 9 auf den Angriffsabschnitt 18 sowie zur drehfesten Halterung des Bedienungsdrehgriffs 9 dient eine in Längsrichtung der Kartusche 6 verlaufende Nut 19, die mit einem entsprechenden Vorsprung 20 am ersten Bedienungsdrehgriff 9 zusammenwirkt. Bei der dargestellten Ausführungsform sind entsprechende Nuten 19 und Vorsprünge 20 jeweils auf gegenüberliegenden Seiten des Angriffsabschnitts 18 und in der entsprechenden Einsetzöffnung des ersten Bedienungsdrehgriffs 9 vorgesehen.

Um von der Stirnseite der Kartusche 6 nicht nur die Mengen- sondern auch die Temperatureinstellung vornehmen zu können, weist die Temperatureinstelleinrichtung einen aus dem Innengehäuse 15 stirnseitig herausragenden Angriffsabschnitt 21 zum Aufsetzen des zweiten Bedienungsdrehgriffs 10 auf. Im montierten Zustand mit befestigten Bedienungsdrehgriffen 9, 10 weisen der erste Bedienungsdrehgriff 9 und der zweite Bedienungsdrehgriff 10 die gleiche Drehachse auf, bei der es sich um die Achse D handelt.

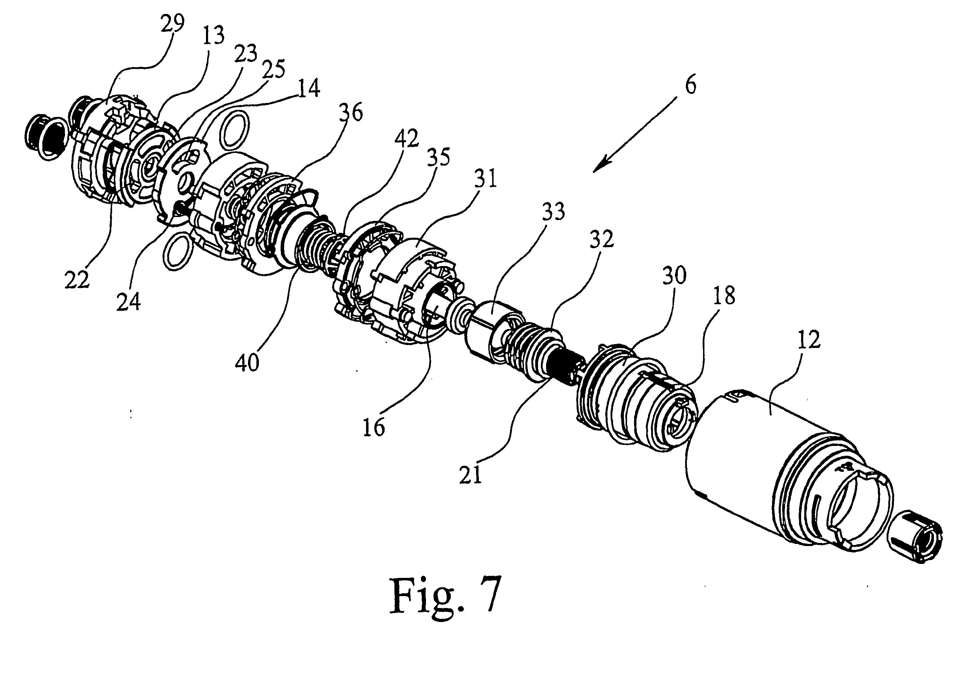

Wie sich aus Fig. 7 ergibt, erstrecken sich die in den Ventilscheiben 13, 14 vorgesehenen Ventilöffnungen 22, 23, 24, 25 über weniger als 90°, wobei sich der maximale Öffnungsquerschnitt nach einer Drehbewegung von etwa 90° ergibt.

Grundsätzlich kann vorgesehen sein, daß das Innengehäuse 15 gegenüber dem Außengehäuse 12 durch entsprechende Anschläge nur um 180° drehbar ist. Vorliegend sind derartige Anschläge jedoch nicht vorgesehen. Zur Mengeneinstellung sind Mittel zur Drehbegrenzung des ersten Bedienungsdrehgriffs 9 vorgesehen, die eine Drehung von nur etwa 90° ermöglichen. Im einzelnen weisen die Mittel zur Drehbegrenzung des ersten Bedienungsdrehgriffs 9 eine am Umfang des Außengehäuses 12 verlaufende Führungsnut 26 auf, in die der Vorsprung 20 eingreift. Die Führungsnut 26 erstreckt sich dabei über eine Bogenlänge von etwa 90°, so daß die maximale Drehung des ersten Bedienungsdrehgriffes 9 hierdurch vorgegeben ist. Im übrigen sind am Außengehäuse 12 und am überstehenden Angriffsabschnitt 18 des Innengehäuses 15 korrespondierende Markierungen 27, 28 zur Anzeige des Drehzustands des Innengehäuses 15 gegenüber dem Außengehäuse 12 vorgesehen.

Wie sich insbesondere aus den Fig. 5 und 6 ergibt, stellt die Kartusche 6 mit den darin enthaltenden Bauteilen eine für sich handhabbare und abgeschlossene Baueinheit dar. Die Kartusche 6 besteht aus einer Vielzahl von Bauteilen, die in Fig. 7 im einzelnen dargestellt sind, wenngleich nicht alle Teile im einzelnen beschrieben sind. Zum Verschluß der Kartusche 6 dient eine Bodenplatte 29, die mit dem Außengehäuse 12 verrastet ist. Dabei ist die feste Ventilscheibe 13 drehfest an der Bodenplatte 29 gehalten, so daß sich auf diese Weise letztlich eine drehfeste Verbindung mit dem Außengehäuse 12 ergibt.

Wie sich weiter aus den Fig. 5 bis 7 ergibt, ist das Innengehäuse 15 mehrteilig ausgebildet, wobei benachbarte Teile des Innengehäuses 15 drehfest miteinander verbunden sind. Das Innengehäuse 15 weist ein oberes Innengehäuseteil 30 mit dem Angriffsabschnitt 18 auf. Mit dem Innengehäuseteil 30 ist das Innengehäuseteil 31 verbunden, wobei zwischen den beiden Innengehäuseteilen 30, 31 eine Verstellschraube 32 und eine Verstellmutter 33 zur Erzielung einer Axialbewegung des thermostatischen Elements 16 und der damit verbundenen Bestandteile vorgesehen sind. Außenseitig an der Verstellschraube 32 befindet sich der Angriffsabschnitt 21 für den zweiten Bedienungsdrehgriff 10 zur Temperaturverstellung. Des weiteren befindet sich zwischen den beiden Innengehäuseteilen 30, 31 das als Dehnstoffelement ausgebildete thermostatische Element 16, das mit seinem einen Ende in einer entsprechenden Aufnahme 34 der Verstellmutter 33 aufgenommen ist.

An das Innengehäuseteil 31 schließen sich zwei weitere vergleichsweise schmale Innengehäuseteile 35, 36 an, zwischen denen eine Dichtmembran 37 gehalten ist. Schließlich ist ein unteres Innengehäuseteil 38 vorgesehen, das sich an das Innengehäuseteil 36 anschließt. Zur Verspannung der Dichtmembran 37 sind die Innengehäuseteile 31, 35, 36 und 38 über entsprechende Schrauben 39 miteinander verschraubt.

Wie sich insbesondere aus den Fig. 5 und 6 ergibt, wirken auf das thermostatische Element 16 eine Rückstellfeder 40 und eine Überhubfeder 41, die sich ebenfalls innerhalb der Kartusche 6 befinden.

Wesentlich in diesem Zusammenhang ist, daß die Rückstellfeder 40 und die Überhubfeder 41 vorliegend in gleicher Richtung auf das thermostatische Element 16 wirken, vorliegend nämlich in Pfeilrichtung F, so daß sich die Federkräfte der Rückstellfeder 40 und der Überhubfeder 41 im Überhubfall, also bei einer Längenänderung des thermostatischen Elements addieren.

Im dargestellten Ausführungsbeispiel sind die Rückstellfeder 40 und die Überhubfeder 41 auf der gleichen Seite in bezug auf das thermostatische Element 16 angeordnet. Dabei wird eine besonders platzsparende Anordnung dadurch erzielt, daß die Rückstellfeder 40 und die Überhubfeder 41 jeweils als Schraubenfedern ausgebildet sind, wobei die Überhubfeder 41 innerhalb der Rückstellfeder 40 angeordnet ist.

Zur Übertragung der Federkräfte der Rückstellfeder 40 und der Überhubfeder 41 auf das thermostatische Element 16 und zur Anlage dieser Federn dient ein Aufnahmeteil 42, das, was im einzelnen nicht dargestellt ist, kreuzartig ausgebildet ist und Durchströmungsöffnungen aufweist. Das Aufnahmeteil 42 weist einen äußeren flanschartigen Angriffsabschnitt 43 und einen endseitigen Zapfen 44 auf. Am Angriffsabschnitt 43 liegt dabei die Rückstellfeder 40 an, während die Überhubfeder 41 auf den Zapfen 44 aufgesetzt ist. Auf der gegenüberliegenden Seite des Aufnahmeteils 42 liegt das thermostatische Element 16 an. Nicht dargestellt ist, daß die Rückstellfeder 40 und die Überhubfeder 41 etwa die gleiche Federkraft, nämlich jeweils etwa 50 N aufweisen.

Als Temperatursteuerteil, auf das das thermostatische Element 16 wirkt, dient eine im Innengehäuse 15 gelagerte Hülse 45. Dabei befindet sich das Aufnahmeteil 42 innerhalb der Hülse 45 und wird über die Rückstellfeder 40 gegen einen inneren Anschlag der Hülse 45 gedrückt. Die Hülse 45 weist an ihren Stirnseiten jeweils Steuerkanten für Warm- und Kaltwasser auf. Die Warmwassersteuerkante befindet sich auf der linken, die Kaltwassersteuerkante auf der rechten Seite der Hülse 45.

Um den zur Verfügung stehenden Raum im Innengehäuse 15 optimal auszunutzen, sind die Rückstellfeder 40 und die Überhubfeder 41 innerhalb der Hülse 45 angeordnet. Dabei stützt sich die zur Rückstellung der Hülse 45 dienende Rückstellfeder 40 auf der dem Aufnahmeteil 42 gegenüberliegenden Seite an einem umlaufenden Bund 46 der Hülse 45 ab, während sich die auch zur Halterung des thermostatischen Elements 16 dienende Überhubfeder 41 am Innengehäuseteil 38 abstützt. Hierfür ist ein entsprechender Zapfen 47 vorgesehen, auf den die Überhubfeder 41 aufgesetzt ist.

## Patentansprüche

1. Sanitäre Mischbatterie (1), insbesondere zum Wandeinbau, mit einer ein Außengehäuse (12) aufweisenden Kartusche (6), mit einer Mengeneinstelleinrichtung, einer Temperatureinstelleinrichtung und einer Thermostateinrichtung, wobei die Mengeneinstelleinrichtung eine feststehende Ventilscheibe (13) und eine mit dieser zusammenwirkende drehbewegliche Ventilscheibe (14) aufweist, im Außengehäuse (12) ein Innengehäuse (15) koaxial zum Au-ßengehäuse (12) um wenigstens 180° drehbar gelagert ist, im Innengehäuse (15) die Thermostateinrichtung angeordnet ist, die drehbewegliche Ventilscheibe (14) mit dem Innengehäuse (15) drehfest verbunden ist, die feststehende Ventilscheibe (13) drehfest zum Außengehäuse (12) ist und das Innengehäuse (15) stirnseitig aus dem Außengehäuse (12) mit einem Angriffsabschnitt (18) zum Aufsetzen eines ersten Bedienungsdrehgriffs (9) zur Mengeneinstellung herausgeführt ist, **dadurch gekennzeichnet, daß** Mittel zur Drehbegrenzung des ersten Bedienungsdrehgriffs (9) vorgesehen sind, die Mittel zur Drehbegrenzung eine Führungsnut (26) am Außengehäuse (12) und einen in der Führungsnut (26) geführten Vorsprung (20) am ersten Bedienungsdrehgriff (9) aufweisen, in dem Angriffsabschnitt (18) eine in Längsrichtung der Kartusche (6) verlaufende Nut (19) vorgesehen ist, und der Vorsprung (20) am ersten Bedienungsdrehgriff (9) mit der in dem Angriffsabschnitt (18) vorgesehenen Nut (19) zusammenwirkt.

2. Sanitäre Mischbatterie nach Anspruch 1, **dadurch gekennzeichnet, daß** die Temperatureinstelleinrichtung einen aus dem Innengehäuse (15) stirnseitig herausragenden Angriffsabschnitt (21) zum Aufsetzen eines zweiten Bedienungsdrehgriffs (10) zur Temperatureinstellung aufweist.

3. Sanitäre Mischbatterie nach Anspruch 2, **dadurch gekennzeichnet, daß** der erste Bedienungsdrehgriff (9) und der zweite Bedienungsdrehgriff (10) die gleiche Drehachse aufweisen.

4. Sanitäre Mischbatterie nach einem der Ansprüche 1 bis 3, **dadurch gekennzeichnet, daß** die Ventilöffnungen (22, 23, 24, 25) der Ventilscheiben (13, 14) derart ausgebildet sind, daß sich der maximale Öffnungsquerschnitt nach einer Drehung von kleiner 180°, vorzugsweise bei etwa 90° ergibt.

5. Sanitäre Mischbatterie nach einem der Ansprüche 1 bis 4, **dadurch gekennzeichnet, daß** am Außengehäuse (12) und am Innengehäuse (15) miteinander korrespondierende Markierungen (27, 28) zur Anzeige des Drehzustands des Innengehäuses (15) gegenüber dem Außengehäuse (12) vorgesehen sind.

6. Sanitäre Mischbatterie nach einem der Ansprüche 1 bis 5, **dadurch gekennzeichnet, daß** am Außengehäuse (12) eine unterseitige Bodenplatte (29) zum Verschluß der Kartusche (6) befestigt ist.

7. Sanitäre Mischbatterie nach Anspruch 6, **dadurch gekennzeichnet, daß** die Bodenplatte (29) mit dem Außengehäuse (12) verrastet ist.

8. Sanitäre Mischbatterie nach Anspruch 6 oder 7, **dadurch gekennzeichnet, daß** die feststehende Ventilscheibe (12) drehfest an der Bodenplatte (29) gehalten ist.

9. Sanitäre Mischbatterie nach einem der Ansprüche 1 bis 8, **dadurch gekennzeichnet, daß** das Innengehäuse (15) mehrstückig ausgebildet ist und benachbarte Teile des Innengehäuses (15) drehfest miteinander verbunden sind.

## Claims

1. Sanitary mixer tap (1), in particular for wall mounting, with a cartridge (6) having an outer housing (12), with a quantity-setting device, with a temperature-setting device and with a thermostat device, the quantity-setting device having a fixed valve disc (13) and a rotationally movable valve disc (14) cooperating with the latter, an inner housing (15) being mounted rotatably through at least 180° in the outer housing (12) coaxially with respect to the outer housing (12), the thermostat device being arranged in the inner housing (15), the rotationally movable valve disc (14) being connected fixedly in terms of rotation to the inner housing (15), the fixed valve disc (13) being fixed in terms of rotation with respect to the outer housing (12), and the inner housing (15) being led on the end face with an engagement portion (18) out of the outer housing (12) for the attachment of a first rotary operating grip (9) for quantity setting, **characterized in that** means for limiting the rotation of the first rotary operating grip (9) are provided, the rotation-limiting means having a guide groove (26) on the outer housing (12) and a projection (20), guided in the guide groove (26), on the first rotary operating grip (9), a groove (19) running in the longitudinal direction of the cartridge (6) is provided in the engagement portion (18), and the projection (20) on the first rotary operating grip (9) cooperates with the groove (19) provided in the engagement portion (18).

2. Sanitary mixer tap according to Claim 1, **characterized in that** the temperature-setting device has an engagement portion (21), projecting out of the inner housing (15) on the end face, for the attachment of a second rotary operating grip (10) for temperature setting.

3. Sanitary mixer tap according to Claim 2, **characterized in that** the first rotary operating grip (9) and the second rotary operating grip (10) have the same axis of rotation.

4. Sanitary mixer tap according to one of Claims 1 to 3, **characterized in that** the valve orifices (22, 23, 24, 25) of the valve discs (13, 14) are designed in such a way that the maximum orifice cross section is obtained after a rotation of less than 180°, preferably of about 90°.

5. Sanitary mixer tap according to one of Claims 1 to 4, **characterized in that** mutually corresponding markings (27, 28) for indicating the rotary state of the inner housing (15) with respect to the outer housing (12) are provided on the outer housing (12) and on the inner housing (15).

6. Sanitary mixer tap according to one of Claims 1 to 5, **characterized in that** an underside bottom plate (29) for closing the cartridge (6) is fastened to the outer housing (12).

7. Sanitary mixer tap according to Claim 6, **characterized in that** the bottom plate (29) is interlocked with the outer housing (12).

8. Sanitary mixer tap according to Claim 6 or 7,
**characterized in that** the fixed valve disc (13) is held fixedly in terms of rotation on the bottom plate (29).

9. Sanitary mixer tap according to one of Claims 1 to 8, **characterized in that** the inner housing (15) is of multi-part design and adjacent parts of the inner housing (15) are connected fixedly in terms of rotation to one another.

## Revendications

1. Mitigeur (1) pour installation sanitaire, notamment pour l'installation dans une paroi, comprenant une cartouche (6) présentant un boîtier extérieur (12), avec un dispositif pour ajuster la quantité, un dispositif pour ajuster la température et un dispositif de thermostat, le dispositif pour ajuster la quantité présentant un disque de soupape fixe (13) et un disque de soupape rotatif (14) coopérant avec celui-ci, un boîtier intérieur (15) coaxial au boîtier extérieur (12) étant monté dans le boîtier extérieur (12) de manière à pouvoir tourner de 180°, le dispositif de thermostat étant disposé dans le boîtier intérieur (15), le disque de soupape rotatif (14) étant connecté au boîtier intérieur (15) de manière solidaire en rotation, le disque de soupape fixe (13) étant solidaire en rotation avec le boîtier extérieur (12) et le boîtier intérieur (15) étant ressorti du côté frontal hors du boîtier extérieur (12) avec une portion de prise (18) pour monter une première manette rotative de commande (9) pour l'ajustement de la quantité, **caractérisé en ce que** des moyens pour limiter la rotation de la première manette rotative de commande (9) sont prévus, les moyens de limitation de la rotation présentent une rainure de guidage (26) sur le boîtier extérieur (12) et une saillie (20) guidée dans la rainure de guidage (26) sur la première manette rotative de commande (9), une rainure (19) s'étendant dans la direction longitudinale de la cartouche (6) étant prévue dans la portion de prise (18), et la saillie (20) sur la première manette rotative de commande (9) coopérant avec la rainure (19) prévue dans la portion de prise (18).

2. Mitigeur pour installation sanitaire selon la revendication 1, **caractérisé en ce que** le dispositif d'ajustement de la température présente une portion de prise (21) sortant du côté frontal hors du boîtier intérieur (15) pour le montage d'une deuxième manette rotative de commande (10) pour l'ajustement de la température.

3. Mitigeur pour installation sanitaire selon la revendication 2, **caractérisé en ce que** la première manette rotative de commande (9) et la deuxième manette rotative de commande (10) présentent le même axe de rotation.

4. Mitigeur pour installation sanitaire selon l'une quelconque des revendications 1 à 3, **caractérisé en ce que** les ouvertures de soupape (22, 23, 24, 25) des disques de soupape (13, 14) sont réalisées de telle sorte que la section transversale d'ouverture maximale soit obtenue après une rotation inférieure à 180°, de préférence d'environ 90°.

5. Mitigeur pour installation sanitaire selon l'une quelconque des revendications 1 à 4, **caractérisé en ce que** les marquages (27, 28) correspondants l'un à l'autre sont prévus sur le boîtier extérieur (12) et sur le boîtier intérieur (15), pour l'indication de l'état de rotation du boîtier intérieur (15) par rapport au boîtier extérieur (12).

6. Mitigeur pour installation sanitaire selon l'une quelconque des revendications 1 à 5, **caractérisé en ce qu'**une plaque de fond sous-jacente (29) est fixée sur le boîtier extérieur (12) pour fermer la cartouche (6).

7. Mitigeur pour installation sanitaire selon la revendication 6, **caractérisé en ce que** la plaque de fond (29) est encliquetée avec le boîtier extérieur (12).

8. Mitigeur pour installation sanitaire selon la revendication 6 ou 7, **caractérisé en ce que** le disque de soupape fixe (12) est maintenu de manière solidaire en rotation sur la plaque de fond (29).

9. Mitigeur pour installation sanitaire selon l'une quelconque des revendications 1 à 8, **caractérisé en ce que** le boîtier intérieur (15) est réalisé en plusieurs parties et les parties voisines du boîtier intérieur (15) sont connectées les unes aux autres de manière solidaire en rotation.
